# EUROPEAN PATENT APPLICATION

(11) **EP 4 044 271 A1**
(43) Date of publication of application: **17.08.2022**
(21) Application number: 21156776.3
(22) Date of filing: 12.02.2021
(51) Int. Cl.: H01M 4/04, H01M 4/13, H01M 4/1391, H01M 4/139, H01M 4/62, H01M 4/64, H01M 4/66, H01M 10/0525, H01M 10/0562, H01M 10/0565, H01M 10/058, H01M 4/02, H01M 4/131, H01M 4/133, H01M 4/136, H01M 4/1393, H01M 4/1397, H01M 4/587, H01M 4/58, H01M 4/485, H01M 4/505, H01M 4/525

(54) **NANOSTRUCTURED BATTERY ELECTRODES**

(71) Applicant: Meilleur Temps, 2000 Neuchâtel (CH)
(72) Inventor: SEMON, Guy, 2000 NEUCHATEL (CH)
(74) Representative: IP Trust

(57) **Abstract**

A nanostructure electrode comprising a nanostructured backbone,
- The nanostructured backbone being in the form of a three-dimensional (3D) matrix of channels extending in the total internal volume of the electrode,
- The space around the nanostructured backbone inside the total internal volume of the electrode being infiltrated with at least one kind of non-expanding electrochemically active material,
- the infiltrated nanostructure electrode presenting at least one kind of non-expanding electrochemically active material as a storage source for the electrons and/or ions, and presenting the nanostructured backbone as a continuous pathway throughout the total internal volume for flows of the electrons and/or ions,
- the infiltration of the at least one kind of non-expanding electrochemically active material inside the total internal volume of the electrode being realized to such a level that throughout the total internal volume of the electrode, the backbone is the dominant pathway for the electrons and/or ions flows, and that any other pathway for electrons and/or ions flows via the electrochemically active material is secondary.

## Description

### Technical field

The present invention relates to electrodes, and more particularly, to nanostructured battery electrodes.

### Background

Lithium-ion batteries have several advantages such as high energy to weight ratios, lack of memory effect, and a slow charge loss when not in use. Traditionally, lithium cobalt oxide is used as the cathode and carbon or graphite is used as the anode in a lithium ion battery. However, the commercial electrodes have approximately 50% active material by volume, with a significant portion of the electrode volume occupied by liquid electrolyte, void space and additives. This results from the use of slurries of microspheres with active material in the liquid electrolyte. The lithium ions diffuse through the liquid electrolyte into the slurry and travel a short distance into the microspheres of active material. The binder, a kind of additives, holds the microspheres together so that the electrode does not fall apart. Conductivity aides, another kind of additives, are added to provide electron paths from one microsphere to another. The reason why a solid or almost solid structure could not be used is that there would not be sufficient ionic pathway to allow the ions to rapidly diffuse into the solid structure. The ionic conductivity inside the solid structure during the lithiation/delithiation process is far too low, which hinders the commercial utilization.

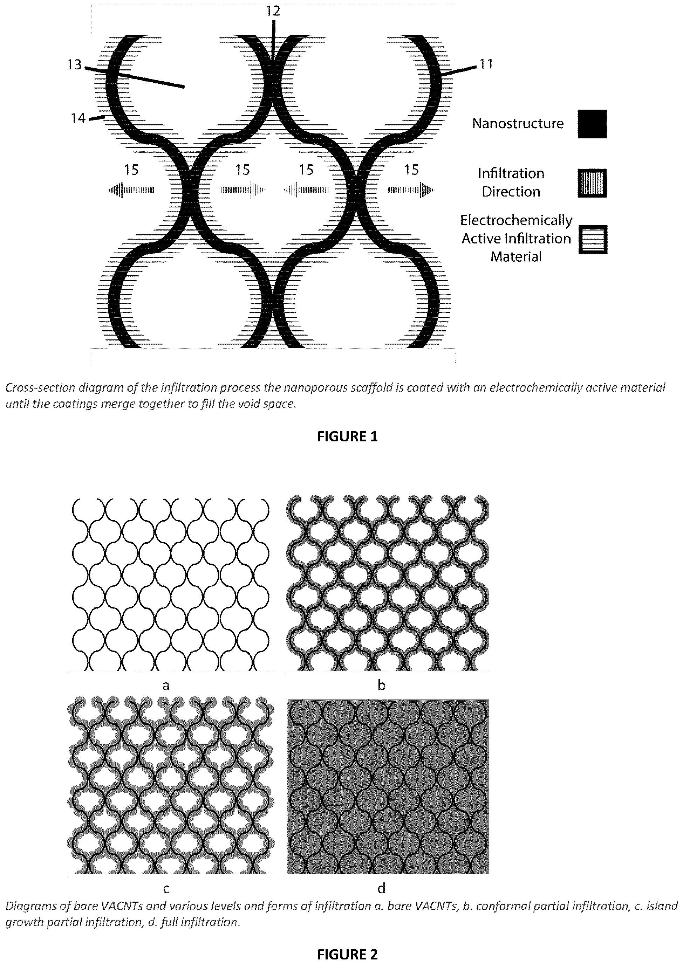

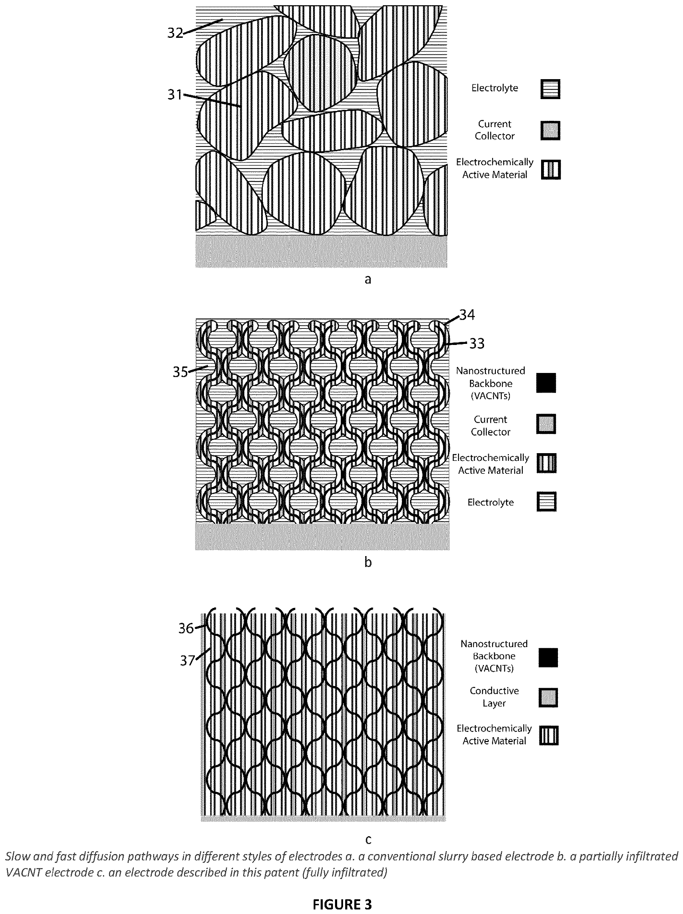

The document US10403894 has disclosed an anode made with lithium metal coated carbon nanotubes, because such material is expected to store much more energy than the traditional carbon anode. In US10403894, the carbon nanotubes are only coated with a thin layer of lithium metal, the space between the nanotubes is left empty, which results in a large porous volume inside the electrode as illustrated in the figures 1B, 3A.

It is also possible to coat the carbon nanotubes with silicon and sulfur, which stores also more energy than traditional material. Since these materials, like silicon and sulfur, expand during the lithiation/delithiation process, it is necessary to leave also large porous volume inside the electrode so that the expansion will not destroy the electrode.

Inside the above-mentioned kinds of electrodes, the porous volume is filled with liquid electrolyte. The coating process seals the opening of the nanotubes, especially the top opening of the nanotubes of the electrode, which prevents the access of ions from electrolyte into the interior of the channel of the nanotubes. Consequently, these electrodes do not rely on ion transport inside the interior channel of the nanotubes. There are two ways for lithium ion diffusion down the height of the electrode on the exterior of the nanotubes: firstly, the lithium ions diffusing through the liquid electrolyte; secondly, the lithium ions diffusing on the exterior surface of the infiltration coating.

This method has a few drawbacks. Additional electrolyte increases the cost and battery mass. In addition, the liquid electrolyte used in this kind of battery requires packaging that wastes volume and occupies a greater ratio of the battery volume as the size of the battery shrinks. Finally, the carbon nanotubes are grown on a copper (Cu) substrate, which is used as a current collector. The shape and the footprint of the electrode are limited by the size and shape of the Cu metal foil, which cannot be easily mass produced at small scale.

### Advantages of the invention

The present disclosure has been developed in response to the present state of the art, and in particular, in response to the problems and needs in the art that have not yet been fully solved by electrodes currently available. Compared to the state of the art, the present invention has the following advantages:
- it uses the conventional electrode materials, which have been proven safe in commercial lithium ion battery cells for decades;
- the conventional electrode materials do not expand, which allows to realize a high storage capacity;
- the electrode is a solid structure without liquid electrolytes, so that the overall capacity per volume is increased and the risk of leakage is avoided, which facilitates the storage and transportation;
- it realizes a high energy storage per volume, high charge/discharge rate, and the ability to be scaled down to very small volumes without sacrificing the high energy storage per volume.

The present invention concerns an electrode comprising a nanostructured backbone being infiltrated with a non-expanding electrochemically active material. The non-expanding electrochemically active material includes carbon and metal oxides, including layered oxides, spinal oxides and polyanion oxides, especially lithium cobalt oxides, and lithium aluminum oxide. These materials are ceramics among the five basic material categories (metal, polymer, ceramic, semiconductor and composite). It is necessary to point out that the ionic lithium and lithium bonded into a ceramic are of fundamentally different nature than lithium as a metal, since the chemical structures are different. The lithium as metal has metallic bonds where the electrons are non-localized. Neither ionic lithium nor lithium bonded into a ceramic posses metallic bonds and are consequently not metals.

Different from the state of the art, in which the lithium ion diffusion down the height of the electrode is realized on the exterior of the nanotubes, the present invention proposes to use the interior channel of the nanotubes to realize the ion transport. The present invention concerns an electrode comprising a nanostructured backbone in the form of a three-dimensional matrix, for example, a vertically aligned carbon nanotubes array (VACNT), extending in the total volume of the electrode.

The porous volume inside the electrode around the backbone is fully infiltrated with a non-expanding electrochemically active material to achieve a porosity as low as possible. The full infiltration, which makes the electrode becoming a nonporous structure, closes up the two continuous pathways of the lithium ion diffusion on the exterior of the nanotubes.

The lithium ion diffusion along the interior channels of the VACNT is fast, meanwhile, the VACNT provides also a conductive pathway for the electrons. For the electrode with nanotubes sealed by the infiltration process, it is necessary to remove the sealed top layers to expose the interior channel of the nanotubes to realize the ion transport.

### Brief summary of the invention

The invention concerns a nanostructure electrode comprising a nanostructured backbone,
- The nanostructured backbone being in the form of a three-dimensional (3D) matrix of channels extending in the total internal volume of the electrode,
- The space around the nanostructured backbone inside the total internal volume of the electrode being infiltrated with at least one kind of non-expanding electrochemically active material,
- the infiltrated nanostructure electrode presenting at least one kind of non-expanding electrochemically active material as a storage source for the electrons and/or ions, and presenting the nanostructured backbone as a continuous pathway throughout the total internal volume for flows of the electrons and/or ions,
- the infiltration of at least one kind of non-expanding electrochemically active material inside the total internal volume of the electrode being realized to such a level that throughout the total internal volume of the electrode the backbone is the dominant pathway for the electrons and/or ions flows, and that any other pathway for electrons and/or ions flows via the electrochemically active material is secondary.

The invention concerns a plurality of variations of the electrode, which include the following modes of realization either alone or in combination.
- the backbone is a three-dimensional matrix of vertically aligned nanotubes, nanorods or nanowires, or an aerogel.
- the backbone is realized in a material among carbon, boron nitride, silicon.
- the backbone is a void space in the form of a three-dimensional matrix of interconnected pores surrounded by the non-expanding electrochemically active material inside the electrode.
- the interconnected pores are coated with an electrically conductive coating to form high conductivity pathways for the electrons.
- the electrical coated interconnected pores are filled with inert gas or electrolyte to form ion diffusion pathways
- the channels have open accesses at least one external surface of the electrode.
- the electrode presents a conductive current collector realized by a layer of conductive material on an external surface of the electrode.
- the non-expanding electrochemically active material is a metal oxide, a layered oxide, a spinel oxide, or a polyanion oxide.
- the non-expanding electrochemically active material is a lithium metal oxide.
- the non-expanding electrochemically active material is carbon.
- the carbon is annealed at a temperature more than 1000°C to eliminate trapping of ions and increase coulombic efficiency.

The present invention concerns also a battery comprising:
- a cathode,
- an electrolyte in contact with the cathode; and
- an anode in contact with the electrolyte;
- the cathode and/or the anode is an above-described electrode.

The present invention concerns also several variations of the battery, which has the following features either alone or in combination:
- the battery is a lithium ion battery.
- the electrolyte is an inorganic solid electrolyte, a polymer electrolyte, or a gel polymer electrolyte.

The present invention concerns a method to fabricate an electrode comprising:
Generation of a nanostructured backbone in the form of a three-dimensional matrix of channels extending in the total internal volume of the electrode,
infiltration of the space around the backbone inside the total internal volume of the electrode with at least one kind of non-expanding electrochemically active material,
the infiltration is continued until a certain level, so that throughout the total internal volume of the electrode, the backbone becomes the dominant pathway for the electrons and/or ions flows, and that any other pathway for electrons and/or ions flows via electrochemically active material is secondary,
the infiltrated nanostructure electrode presenting the non-expanding electrochemically active material as a storage source for the electrons and/or ions, and presenting the backbone as the dominant continuous channels throughout the total internal volume for the electrons and/or ions flows.

The present invention concerns also several variations of the battery, which has the following features either alone or in combination:
- the three-dimensional matrix is removed leaving the backbone in the form of a three-dimensional matrix of interconnected pores surrounded by the non-expanding electrochemically active material inside the electrode.
- the interconnected pores are electrical conductively coated.
- the electrical conductively coated interconnected pores are filled with electrolyte.
- a layer of conductive material is deposited on an external surface of the electrode to form a conductive current collector.
- physical /chemical treatment are performed during the infiltration to keep the channels with open accesses on at least one external surface of the electrode.
- the top layers of an external surface are removed to expose open accesses to the channels for ion diffusion
- the electrochemically active material is carbon, wherein the electrode is annealed at a temperature more than 1000°C to eliminate trapping and increase coulombic efficiency.

### Brief description of the drawings

FIG.1 is a cross-section diagram of the infiltration process of the nanostructure;
FIG.2 is a cross-section diagram of the infiltrated nanostructure at different infiltration thickness;
FIG.3 shows the different pathways in different kinds of electrodes;
FIG.4 is a cross-section diagram of an infiltrated nanostructure with tube form pores;
FIG.5 is a cross-section diagram of an electrode;
FIG.6 is a cross-section diagram of a battery.

### Detailed description of the preferred embodiment

It is to be understood that both the foregoing general description and the following detailed description are illustrative and explanatory, and are not restrictive. The section headings used herein are for organizational purposes and are not to be construed as limiting the subject matter described.

### Nanostructure

The document US10403894 describes the growth and structural characterization of graphene-carbon hybrid nanostructure grown directly on a metal foil of Cu. This is a possible choice of the nanostructure. The document US20110183206 describes the growth and structural characterization of vertically aligned carbon nanotubes on the substrate of a stainless-steel foil, which is another candidate of the nanostructure. These methods generate the nanostructure in the form of a three-dimensional (3D) matrix of nanotubes or nanorods. In the above-mentioned methods, the nanostructure grows directly on the metal foil substrate, which is conductive and is used directly as the current collector.

The present invention uses a nanostructured backbone. The word "Backbone" means the chief support of a system. The nanostructured backbone is in the form of a 3D matrix of channels extending in the total internal volume of the electrode. The backbone could be a VACNT array, or any other forms of nanotubes or nanorods, or even an aerogel. As an illustrative example without any limitation effect, a method to generate the backbone is give hereafter. It is possible to use the photolithography to pattern the footprint of a nanostructure onto a silicon wafer in order that the fabricated nanostructure can be detached/separated from the substrate. This method allows to realize a very small and unusual shaped footprint. Footprint means the 2D area occupied by a 3D object. For example, a skyscraper has a very small footprint compared to a factory even if they have the same volume.

The geometry of the nanostructure fabricated on the silicon wafer substrate can be controlled to realize any desired three-dimensional shape. By controlling the pattern of the catalyst using photolithography, any size and shape of the nanostructure footprint can be obtained in a two-dimensional plane. A target height of the nanostructure from nanometer scale up to centimeter scale can be achieved by controlling the upwards extrusion growth on the catalyst.

This possibility opens two important aspects for the application:
1. For the batteries as components on PCB boards, it is necessary that the footprints of the components take up as little board space as possible.
2. For the wearable devices or micro robotics, any irregular footprint, or even any 3D shape can be fabricated according to the available space within the device to maximize space usage, knowing till now there are only small-size batteries with square or rectangular footprint.

As illustrated in figure 1, the wavy shape columns represent a small part of the nanotube matrix (11), for example a matrix of vertically aligned carbon nanotubes. Each nanotube continues in both upper and lower directions and repeats the pattern until reaches a desired length, which can be as small as 1 micrometer and as large as several centimeters. Thus, the size of the electrode can vary between several micrometers to several centimeters, and the shape can be designed as completely irregular, which is defined by the pattern of the catalyst. The diameter of the nanotubes and the distance between the nanotubes are in the order of tens of nanometers. The adjacent nanotubes touch each other in some places (12), like the branches of the trees across the branches from nearby trees. The resulted three-dimensional (3D) matrix of nanotubes is like a forest with nanoporous scaffold, which can generally present more than 80% empty space (13) in its volume. In certain embodiment where the CNTs (11) take up between 5-15% of the volume, it is possible to get an empty space (13) occupying 85%, or even 90% of the volume.

An infiltration process is carried out to fill the nanostructure with storage material (14), which is a non-expanding electrochemically active material. The arrows (15) in the figure 1 indicate the infiltration direction. As the infiltration process continues, the surface of the nanotubes is coated with more and more electrochemically active material (14). The coated layer becomes thicker and thicker so that the coatings merge together to fill in the empty space between the nanotubes.

Figure 2 illustrates the development of the infiltration thickness from zero infiltration to full infiltration. The figure 2A shows cross-sectional diagram of a bare VACNT without infiltration. The figure 2B shows cross-sectional diagram and the scanning electron microscopic picture of the VACNT with a conformal coating of infiltration material. For the infiltration process, some deposition methods coat conformally while others coat with small spheres that grow in size as the infiltration continues. The difference depends on the nucleation and island growth mechanism that dominate during the infiltration process. The figure 2C shows cross-sectional diagram of the VACNT with a coating of spheres. Both 2A and 3B are the examples of partial infiltration. The figure 2D shows cross-sectional diagram of the VACNT fully infiltrated.

A full infiltration means that the empty space inside the electrode around the backbone is fully infiltrated with a non-expanding electrochemically active material to limit the porosity as low as possible. For example, the CNTs can take up 5-15% of the volume according to the best estimation. The lowest porosity that has been achieved is around 5%. With the situation that the CNTs take 5% of the volume, the infiltration can reach 90% of the total volume.

Inside the nanostructure, the nanotubes are interwoven throughout the volume. It is like the trees with branches across each other. When the full infiltration is applied, the infiltrated material locks all the places where the nanotubes touch each other and fulfills the whole empty space between the nanotubes, thus creating a fully rigid nanostructure.

A fully infiltrated nanostructure is basically a solid brick that can vary from several micrometers to several millimeters in the thickness. The full infiltration makes the nanostructure rigid enough to be manipulated physically. For example, the fully infiltrated nanostructure can be picked up with tweezers, moved from one substrate to another, and epoxied onto a destined surface.

The coating method for the infiltration can be either atomic layer deposition (ALD), melt infiltration, electrodeposition, electroless deposition, infusion with nanoparticles or chemical vapor deposition. The full infiltration process is carried out with a non-expanding electrochemically active material, like a metal oxide, especially a lithium metal oxide, or carbon.

For the next-generation lithium storage materials like silicon and sulfur, they are both hindered by issues related to volume expansion and parasitic reactions with the electrolyte. The full infiltration process does not work for these materials, because the expansion can lead to the deformation of the electrode.

The figure 3 illustrates the diffusion paths of the lithium ion in different kinds of electrodes. Generally, lithium ions can diffuse several microns into graphite and hundreds of nanometers into lithium metal oxides. It is generally considered that the shorter the diffusion distance into the active material, the faster the battery can charge and discharger. The figure 3A shows the traditional electrode, which is composed of electrochemically active material in the form of chunks (31) surrounded by the liquid electrolyte (32). The lithium ions diffuse fast in the liquid electrolyte (32), and diffuse slowly into the electrochemically active material (31). The figure 3B shows the partially infiltrated VACNT as an electrode. The VACNT is used as the backbone (33), which is partially infiltrated with active material (34). The empty space between the partially infiltrated VACNT is filled with liquid electrolyte (35). The lithium ions diffuse fast down in the liquid electrolyte (35), and diffuse slowly into the active material (34). The figure 3C shows the fully infiltrated VACNT as an electrode. The VACNT is used as the backbone (36), which is fully infiltrated with active material (37). Instead of diffusing at the exterior of the VACNT, in the fully infiltrated VACNT, the lithium ions are injected inside the interior channels of VACNT, which provide fast lithium ion diffusion channels. In addition, the ions experience a slow diffusion from the interior channels of VACNT into the active material surrounded the VACNT. The clear advantage is that the fast ion diffusion only takes place inside the VACNT, which takes orders of magnitude less volume than the other methods. In addition, the electrochemically active material as a storage material increases significantly its volume, which augments significantly the storage capacity. Since the VACNT extends in the total internal volume of the electrode, the VACNT provides short distance for ions and electrons to travel into the active material, which enables fast battery charge and discharge. The VACNT can also transport electrons with its good conductivity.

For the electrodes as thick as 1mm, the continuous pathways through the whole length enable an areal capacity up to 20 times greater than current technology. Thin conductive layers can be added to the carbon nanotubes before infiltration process in order to enhance electrical conductivity. The thin conductive layers could also make the nanostructure mechanically more robust, which would be particularly useful if wet processing is used to infiltrate the electrochemically active material.

The backbone can be realized in nanotubes/nanorods with other kinds of materials, so far, they provide a 3D matrix of channels extending in the total internal volume of the electrode. The backbone can also be realized in aerogel.

In addition, the full infiltration is not obligatory. The infiltration can be realized to a level that throughout the total internal volume of the electrode, the backbone becomes the dominant pathway for the electrons and/or ions flows, and that any other pathway for electrons and/or ions flows is secondary, or is negligible. Often, this infiltration level can also provide enough rigidity of the structure for physical treatment.

In one particular embodiment, the nanotubes inside the fully infiltrated nanostructure can be burned out. For example, in a nanostructure with the vertically aligned carbon nanotubes (VACNT) fully infiltrated with lithium metal oxide, the VACNT can be burned out using oxygen or water at high temperature (>500 C for O₂, >700 C for H₂O). After the burning out process, the carbon nanotubes as the scaffold of the nanostructure is removed, leaving the infiltrated lithium metal oxide inside the nanostructure.

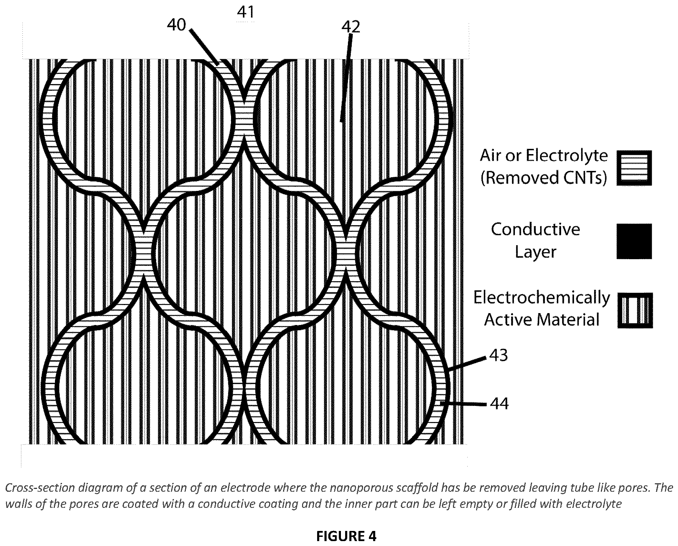

The figure 4 shows the cross-section diagram of an infiltrated nanostructure (41). The scaffold is removed leaving tube form pores (40). It is the interconnected tube form pores surrounded by the infiltrated material (42) form the new backbone inside the structure and provide the chief support of the structure. This embodiment has the advantage to largely increase the lithium ion diffusion rate. Inside the VACNT, although the nanotubes touch each other, they are still separated by the walls between the nanotubes. The lithium diffusion going through the walls is extremely slow. The burning process removes the nanotubes, leaving only the tube form pores that form an interconnected network. Especially, the walls at the touching points between the nanotubes are opened, which become open channels for the lithium ion diffusion. Lithium ion can transport on the surface of the pores.

In another embodiment, the tube form pores (40) are coated with an electrically conductive layer (43) to create transport pathways for the electrons and/or ions. The interior void space inside the tube form pores (40) can be either filled with air or electrolyte (44) to further facilitate the lithium ion diffusion.

In another embodiment, a precoating of carbon could be applied to the carbon nanotubes before infiltration process. In this embodiment, after the burning out process, the ultimate sizes of the channels are increased by the additional carbon precoating, which are moved together with the carbon nanotubes.

A concrete example to fabricate a carbon electrode is explained using the burning-out process. Firstly, applying a thin layer coating of silica, silicon or silicon dioxide to the VACNT by CVD or ALD. Secondly, the VACNT is burned out by annealing in air at 500°C, thus leaving an interlocked structure of silica or silicon oxide scaffold as inner channels. Thirdly, the silica scaffold is full infiltrated with carbon. fourthly, the silica or silicon oxide is removed by etching with an HF or KOH, which leaves a fully infiltrated carbon electrode with interior channels in the form of nanoscale tube form pores. Finally, using ALD to coat the interior channel walls with a conductive film e.g. Ti or W. Optionally, the remaining pores could be left unfilled or filled with a solid or quasi solid electrolyte.

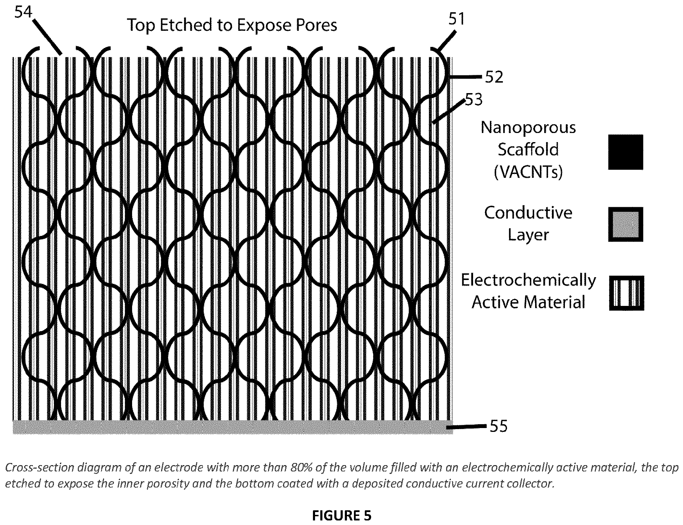

The figure 5 illustrates the cross-section diagram of an electrode (51). The electrode comprises a backbone (52) of VACNT coated with electrochemically active material (53), which occupies more than 80% of the total internal volume of the electrode. In order that the lithium ions can diffuse along the interior of the channels inside the electrode, it is necessary to have the open access (54) of the channels at the surface of the electrode. One possibility is to avoid the sealing of the open access of the channels at the electrode surface by physical / chemical treatment. Another possibility is to do a normal infiltration process, which seals the open access of the channels at the electrode surface. Then using an etching method to remove the top layers of the electrochemically active material on the nanostructure and to expose the inner channels of the nanotubes or the inner porosity/pores, which provide a rapid pathway for the lithium ions and/or electrons. The sealed top layers can be removed either by a plasma etch or by mechanically polishing. In addition, a thin layer of conductive material is deposited on the surface opposite to the non-sealed surface of the nanostructure to form a current collector (55). The thickness of this conductive layer is more than ten times thinner than the metal foils currently used as substrate and current collector.

For the case in which the electrochemically active material is carbon, it is not necessary to remove the top layers, since the lithium ion transport through the sealed top layers is not as slow for graphitic carbon. And this carbon electrode can be used directly for the battery without metal layer deposition, since graphite is conductive. However, removing the top layers of carbon would increase the charge/discharge speed of the electrons.

A full infiltration of more than 80% of the internal volume can increase the volumetric capacity by >70%. The thinner metal current collector, or even a current collector based on graphite without metal, further increases the volumetric and areal capacity.

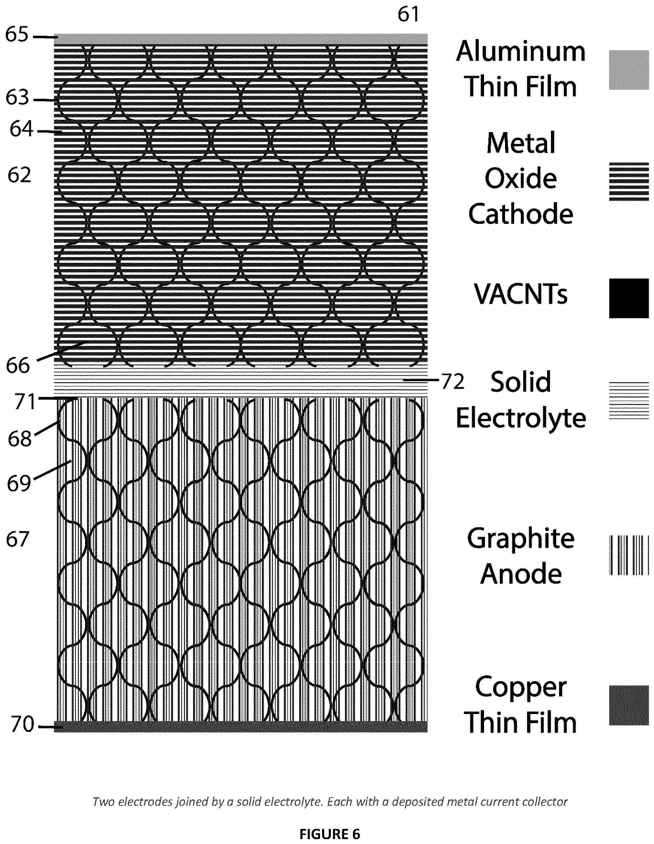

The figure 6 illustrate an example of a battery (61) composed of the electrodes made on the fully infiltrated nanostructure. For the cathode (62), the nanostructure is a matrix of vertically aligned carbon nanotubes (63). This nanostructure is fully infiltrated with metal oxide (64), e.g. lithium metal oxide. An aluminum thin film (65) is deposited on the surface of the nanostructure to form a current collector. The opposite side (66) of the nanostructure is etched to expose the inner pores.

For the anode (67), the nanostructure is also a matrix of vertically aligned carbon nanotubes (68). This nanostructure is fully infiltrated with carbon graphite (69). A copper thin film (70) is deposited on the surface of the nanostructure to form a current collector. The opposite side (71) of the nanostructure is etched to expose the inner pores.

The non-sealed side of each electrode is put into contact with a layer of solid electrolyte (72). Thus, the battery is realized in a form of sandwich, with the solid electrolyte inserted between the cathode and the anode, both of which are made of fully infiltrated nanostructure. The solid electrolyte can be realized, but not limited to, gel-polymer, polymer, inorganic solid electrolyte or a porous separator.

In one embodiment, the carbon infiltrated electrode is annealed at a temperature >1000°C in a vacuum or in an inert atmosphere to eliminate trapping of lithium ions and increase coulombic efficiency. The carbon infiltration has dangling bonds and defects that can trap lithium ions. The annealing process can heal these defects and make a more graphitic structure to avoid the trapping.

The variations of the batteries are:
- where other kinds of nanotubes or nanowires are used instead of carbon nanotubes for the electrodes
- where the carbon nanotubes have been removed and a conductive coating added to the tube like pores that are left behind.
- where the pores of the CNTs or the pores left behind from removing the CNTs are filled with an electrolyte
- where the solid electrolyte is a gel polymer electrolyte, inorganic solid electrolyte, or polymer electrolyte.

As illustrated in the figure 6, the major volume of the battery is occupied by the storage material of the electrodes, which largely enhance the storage capacity. The solid electrolyte layer is relatively much thinner compared to the electrodes.

The advantage of this kind of battery is high energy storage per volume because of the use of the electrodes with up to 90% active storage material by volume and little volume is taken up by the current collectors and there is no separator. It also rapidly charges and discharges because the nanotubes provide rapid ion transport, and the battery can be scaled down to small sizes.

Usually, as battery gets smaller, they lose out on capacity. With the present invention, it is possible to have a footprint as small as 25 micrometer2 and a total size smaller than 10 micrometer3 without a significant decrease in volumetric or areal capacities. In the present invention, we are not using a material with improved storage capacity, but increasing the amount of storage material per volume of the electrode. The unique aspect of the geometry is that the CNTs provide a continuous path for electrons and ions throughout the volume of a thick electrode.

The vertically aligned nanotubes allow us to do very thick electrodes with small footprint, while still having significant capacity, which could be valuable for fitting the battery into electronic devices. For example, the solid state lithium ion batteries with capacities <1mAh, and dimension < 1mm³ are good candidates for the application including, but not limiting to, medical devices, micro sensors, active RFID tags, wearable electronics, and micro robotics.

Solid-state micro battery can be packaged separately as PCB components. More advantageously, Solid-state micro battery can be packaged to be integrated into other electronic components like, medical devices, micro sensors, active RFID tags, wearable electronics, and micro robotics.

## Claims

1. A nanostructure electrode comprising a nanostructured backbone,
- The nanostructured backbone being in the form of a three-dimensional (3D) matrix of channels extending in the total internal volume of the electrode,
- The space around the nanostructured backbone inside the total internal volume of the electrode being infiltrated with at least one kind of non-expanding electrochemically active material,
- the infiltrated nanostructure electrode presenting at least one kind of non-expanding electrochemically active material as a storage source for the electrons and/or ions, and presenting the nanostructured backbone as a continuous pathway throughout the total internal volume for flows of the electrons and/or ions,
- the infiltration of the at least one kind of non-expanding electrochemically active material inside the total internal volume of the electrode being realized to such a level that throughout the total internal volume of the electrode, the backbone is the dominant pathway for the electrons and/or ions flows, and that any other pathway for electrons and/or ions flows via the electrochemically active material is secondary.

2. An electrode of claim 1, wherein the backbone is a three-dimensional matrix of vertically aligned nanotubes, nanorods or nanowires, or an aerogel.

3. An electrode of claim 1, wherein the backbone is realized in a material among carbon, boron nitride, silicon.

4. An electrode of claim 1, wherein the backbone is a void space in the form of a three-dimensional matrix of interconnected pores surrounded by the non-expanding electrochemically active material inside the electrode.

5. An electrode of the precedent claim, wherein the interconnected pores are coated with an electrically conductive coating to form high conductivity pathways for the electrons.

6. An electrode of the precedent claim, wherein the electrical coated interconnected pores are filled with inert gas or electrolyte to form ion diffusion pathways.

7. An electrode of claim 1, wherein the channels have open accesses at at least one external surface of the electrode.

8. An electrode of claim 1, wherein the electrode presents a conductive current collector realized by a layer of conductive material on an external surface of the electrode.

9. An electrode of claim 1, wherein the non-expanding electrochemically active material is a metal oxide, a layered oxide, a spinel oxide, or a polyanion oxide.

10. An electrode of claim 1, wherein the non-expanding electrochemically active material is a lithium metal oxide.

11. An electrode of claim 1, wherein the non-expanding electrochemically active material is carbon.

12. An electrode of the precedent claim, wherein the carbon is annealed at a temperature more than 1000°C to eliminate trapping of ions and increase coulombic efficiency.

13. A battery comprising:
- A cathode,
- An electrolyte in contact with the cathode, and
- An anode in contact with the electrolyte,
- Wherein the cathode and/or the anode is an electrode of the claim 1.

14. A battery of the claim 12, wherein the battery is a lithium ion battery.

15. A battery of the claim 12, wherein the electrolyte is an inorganic solid electrolyte, a polymer electrolyte, or a gel polymer electrolyte.

16. A method to fabricate an electrode comprising:
- Generation of a nanostructured backbone in the form of a three-dimensional matrix of channels extending in the total internal volume of the electrode,
- infiltration of the space around the backbone inside the total internal volume of the electrode with at least one kind of non-expanding electrochemically active material,
- the infiltration is continued until a certain level, so that throughout the total internal volume of the electrode, the backbone is the dominant pathway for the electrons and/or ions flows, and that any other pathway for electrons and/or ions flows via the electrochemically active material is secondary,
- the infiltrated nanostructure electrode presenting the non-expanding electrochemically active material as a storage source for the electrons and/or ions, and presenting the backbone as the dominant continuous channels throughout the total internal volume for the electrons and/or ions flows.

17. A method of the method 15, wherein the 3D matrix is removed leaving the backbone in the form of a three-dimensional matrix of interconnected pores surrounded by the non-expanding electrochemically active material inside the electrode.

18. A method of the precedent method, wherein the interconnected pores are electrical conductively coated.

19. A method of the precedent method, wherein the electrical conductively coated interconnected pores are filled with electrolyte.

20. A method of the precedent method, wherein a layer of conductive material is deposited on an external surface of the electrode to form a conductive current collector.

21. A method according any of the precedent method, wherein physical /chemical treatment are performed during the infiltration to keep the channels with open accesses on at least one external surface of the electrode.

22. A method according any of the precedent method, wherein the top layers of an external surface are removed to expose open accesses to the channels for ion diffusion.

23. A method according to any of the precedent method, wherein the electrochemically active material is carbon, wherein the electrode is annealed at a temperature more than 1000°C to eliminate trapping of ions and increase coulombic efficiency.
